# EUROPEAN PATENT APPLICATION

(11) **EP 2 844 036 A2**
(43) Date of publication of application: **04.03.2015**
(21) Application number: 14160476.9
(22) Date of filing: 18.03.2014
(51) Int. Cl.: H05B 33/08

(54) **Power supply device and illumination device**

(30) Priority: 12.08.2013 JP 2013167632
(71) Applicant: Toshiba Lighting & Technology Corporation, Yokosuka-shi Kanagawa 237-8510 (JP); Kabushiki Kaisha Toshiba, Minato-ku, Tokyo 105-8001 (JP)
(72) Inventor: Kitamura, Noriyuki, Kanagawa 237-8510 (JP); Yasuzumi, Takenori, Tokyo (JP)
(74) Representative: Willquist, Sofia Ellinor

(57) **Abstract**

According to one embodiment, a power supply device (110, 301, 302, 303, 304) includes a substrate (10), a first inductor (20), and a second inductor (30). The substrate (10) has a first surface (10a) and a second surface (10b) on opposite side from the first surface (10a). The first inductor (20) includes a first coil (22) having a coil center axis substantially parallel to a first direction, is used for a switching circuit for controlling power supplied to a load (80), and is mounted on the first surface (10a) of the substrate (10). The second inductor (30) includes a second coil (32) having a coil center axis substantially parallel to the first direction, is electrically connected to the first inductor (20), and is mounted on the second surface (10b) of the substrate (10). As viewed in a direction orthogonal to the first surface (10a), position of the first coil (22) of the first inductor (20) does not overlap position of the second coil (32) of the second inductor (30).

## Description

### FIELD

Embodiments described herein relate generally to a power supply device and an illumination device.

### BACKGROUND

As a power supply device, there is known a switching power supply in which a switching element is used to generate a prescribed voltage and current. In the switching power supply, a radio frequency current is generated by intermittently switching on/off the switching element and sent to an inductor for power conversion. This type of power supply device entails generation of electromagnetic interference (EMI) based on switching noise. EMI interferes as noise in the input wiring and the output wiring. Thus, the power supply device is provided with an inductor for suppressing noise. In the power supply device, it is important to suppress coupling between the inductor for power conversion and the inductor for suppressing noise.

### BRIEF DESCRIPTION OF THE DRAWINGS

FIG. 1A and FIG. 1B are schematic views illustrating a power supply device according to a first embodiment;
FIG. 2A and FIG. 2B are schematic views illustrating the arrangement of the inductors;
FIG. 3 illustrates a magnetic field distribution of the inductor;
FIG. 4 illustrates a magnetic field strength;
FIG. 5A and FIG. 5B are schematic views illustrating models for investigating the arrangement and distance of two inductors;
FIG. 6A and FIG. 6B illustrate the relationship between distance and mutual inductance;
FIG. 7A and FIG. 7B are schematic views illustrating the outer diameter of inductors;
FIG. 8 is a circuit diagram illustrating a first application example;
FIG. 9 is a circuit diagram illustrating a second application example;
FIG. 10 illustrates the noise level;
FIG. 11 is a circuit diagram illustrating a third application example; and
FIG. 12 is a circuit diagram illustrating a fourth application example.

### DETAILED DESCRIPTION

According to one embodiment, a power supply device includes a substrate, a first inductor, and a second inductor. The substrate has a first surface and a second surface on opposite side from the first surface. The first inductor includes a first coil having a coil center axis substantially parallel to a first direction, is used for a switching circuit for controlling power supplied to a load, and is mounted on the first surface of the substrate. The second inductor includes a second coil having a coil center axis substantially parallel to the first direction, is electrically connected to the first inductor, and is mounted on the second surface of the substrate. As viewed in a direction orthogonal to the first surface, position of the first coil of the first inductor does not overlap position of the second coil of the second inductor.

According to another embodiment, an illumination device includes a power supply device and an illumination load. The power supply device includes a substrate, a first inductor, and a second inductor. The substrate has a first surface and a second surface on opposite side from the first surface. The first inductor includes a first coil having a coil center axis substantially parallel to a first direction, is used for a switching circuit for controlling power supplied to a load, and is mounted on the first surface of the substrate. The second inductor includes a second coil having a coil center axis substantially parallel to the first direction, is electrically connected to the first inductor, and is mounted on the second surface of the substrate. As viewed in a direction orthogonal to the first surface, position of the first coil of the first inductor does not overlap position of the second coil of the second inductor. The illumination load is connected to the power supply device.

Various embodiments will be described hereinafter with reference to the accompanying drawings. In the following description, like members are labeled with like reference numerals. The description of the members once described is omitted appropriately.

### (First embodiment)

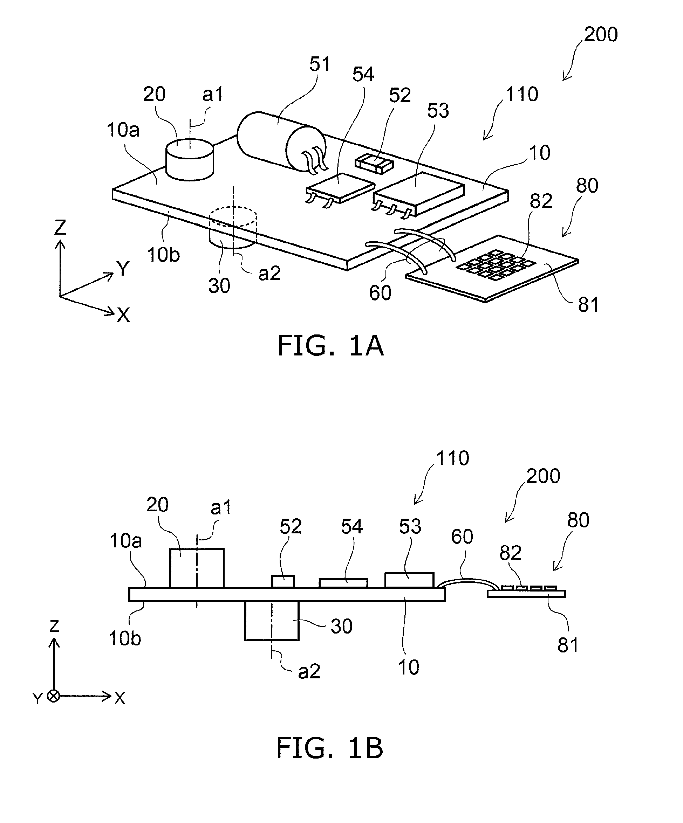

FIG. 1A and FIG. 1B are schematic views illustrating a power supply device according to a first embodiment.

FIG. 1A shows a schematic perspective view of the power supply device 110. FIG. 1B shows a schematic side view of the power supply device 110. FIG. 1A and FIG. 1B show an illumination device 200 based on the power supply device 110.

As shown in FIG. 1A and FIG. 1B, the power supply device 110 according to the embodiment includes a substrate 10, a first inductor 20, and a second inductor 30. The power supply device 110 converts a voltage (e.g., AC voltage) supplied from a power supply, not shown, into a voltage (e.g., DC voltage) depending on the load. The power supply device 110 is a switching power supply device in which the power supplied to the load is controlled by a switching circuit.

The illumination device 200 includes a light emitting device 80 connected to an output end 60 of the power supply device 110. The light emitting device 80 is an example of the load. The light emitting device 80 includes a substrate 81, and an illumination light source 82 such as LED (light emitting diode) mounted on the substrate 81. The light emitting device 80 lights the illumination light source 82 in response to power supplied from the power supply device 110. The light emitting device 80 may include e.g. a plurality of illumination light sources 82 connected in series or in parallel.

The substrate 10 of the power supply device 110 has a first surface 10a and a second surface 10b. The second surface 10b is a surface on the opposite side from the first surface 10a. The first surface 10a is e.g. a front surface of the substrate 10. The second surface 10b is e.g. a back surface of the substrate 10. The first surface 10a and the second surface 10b of the substrate 10 are provided with a wiring pattern, not shown. The substrate 10 may be provided with a shield plate, not shown.

In the embodiment, the direction orthogonal to the first surface 10a is referred to as Z-direction. One of the directions orthogonal to the Z-direction is referred to as X-direction. The direction orthogonal to the Z-direction and the X-direction is referred to as Y-direction.

Various components such as a capacitor 51, a resistor 52, a switching element 53, and a rectifying element 54 constituting the circuit are mounted on the first surface 10a or the second surface 10b of the substrate 10. The first inductor 20 and the second inductor 30 are also mounted on the first surface 10a or the second surface 10b of the substrate 10.

The first inductor 20 is a power conversion inductor for power conversion used in a switching circuit. The second inductor 30 is a noise suppression inductor for suppressing noise in the switching circuit.

The first inductor 20 has a coil center axis a1. The second inductor 30 has a coil center axis a2. In the first inductor 20 and the second inductor 30 including a coil wound around a core, the coil center axes a1 and a2 are also the center axes of the core.

In the power supply device 110, coupling between the first inductor 20 and the second inductor 30 is suppressed by the arrangement of the first inductor 20 and the second inductor 30 based on the relationship between the coil center axis a1 and the coil center axis a2.

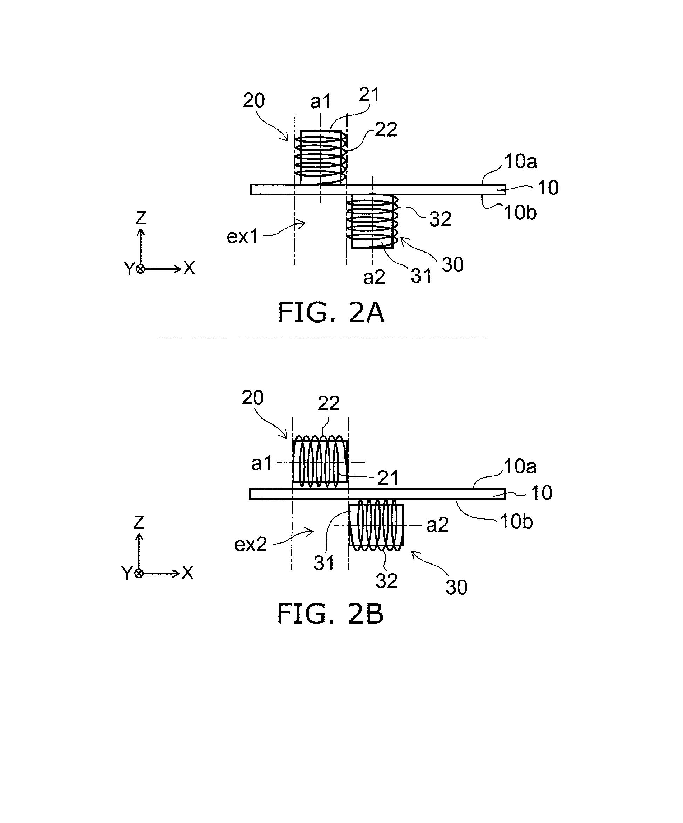

FIG. 2A and FIG. 2B are schematic views illustrating the arrangement of the inductors.

FIG. 2A and FIG. 2B show an arrangement relationship between the first inductor 20 and the second inductor 30 based on the relationship between the coil center axis a1 of the first inductor 20 and the coil center axis a2 of the second inductor 30. The arrangement of the first inductor 20 and the second inductor 30 shown in FIG. 2A and FIG. 2B is applied to the power supply device 110 according to this embodiment.

FIG. 2A and FIG. 2B show the substrate 10, and the first inductor 20 and the second inductor 30 mounted on the substrate 10. The first inductor 20 includes a first coil 22 wound around a first core 21. The first core 21 is shaped like e.g. a cylinder. The first coil 22 is wound in a prescribed direction along the outer periphery of the first core 21. The first inductor 20 has a coil center axis a1 as the winding center of the first coil 22.

The second inductor 30 includes a second coil 32 wound around a second core 31. The second core 31 is shaped like e.g. a cylinder. The second coil 32 is wound in a prescribed direction along the outer periphery of the second core 31. The second inductor 30 has a coil center axis a2 as the winding center of the second coil 32.

In the example shown in FIG. 2A and FIG. 2B, the coil center axis a1 of the first inductor 20 and the coil center axis a2 of the second inductor 30 are substantially parallel. Here, being substantially parallel means being parallel including manufacturing error.

FIG. 2A shows an example in which the coil center axis a1 of the first inductor 20 and the coil center axis a2 of the second inductor 30 are substantially parallel to the Z-direction. In this case, the first inductor 20 is mounted on e.g. the first surface 10a of the substrate 10. The second inductor 30 is then mounted on a surface (e.g., second surface 10b) of the substrate 10 on the opposite side from the surface (e.g., first surface 10a) with the first inductor 20 mounted thereon. In the case where the first inductor 20 is mounted on the second surface 10b of the substrate 10, the second inductor 30 is mounted on the first surface 10a of the substrate 10. That is, the first inductor 20 and the second inductor 30 are mounted on the mutually opposite surfaces of the substrate 10. Furthermore, as viewed in the Z-direction, the position of the second coil 32 of the second inductor 30 does not overlap the position of the first coil 22 of the first inductor 20.

In the example shown in FIG. 2A, assuming that the outer shape of the first coil 22 of the first inductor 20 is extended in the Z-direction, the second coil 32 of the second inductor 30 does not get in the extension region ex1 of the first coil 22 of the first inductor 20. Here, the second coil 32 of the second inductor 30 may be adjacent to the extension region ex1 of the first coil 22 of the first inductor 20.

FIG. 2B shows an example in which the coil center axis a1 of the first inductor 20 and the coil center axis a2 of the second inductor 30 are substantially parallel to the X-direction. In this case, as in the case of FIG. 2A, the first inductor 20 and the second inductor 30 are mounted on the mutually opposite surfaces of the substrate 10. Furthermore, as viewed in the Z-direction, the position of the second coil 32 of the second inductor 30 does not overlap the position of the first coil 22 of the first inductor 20.

In the example shown in FIG. 2B, assuming that the outer shape of the first coil 22 of the first inductor 20 is extended in the Z-direction, the second coil 32 of the second inductor 30 does not get in the extension region ex2 of the first coil 22 of the first inductor 20. Here, the second coil 32 of the second inductor 30 may be adjacent to the extension region ex2 of the first coil 22 of the first inductor 20.

The power supply device 110 according to the embodiment is based on the arrangement of the first inductor 20 and the second inductor 30 shown in FIG. 2A and FIG. 2B. This suppresses coupling between the first inductor 20 and the second inductor 30, and effectively suppresses switching noise.

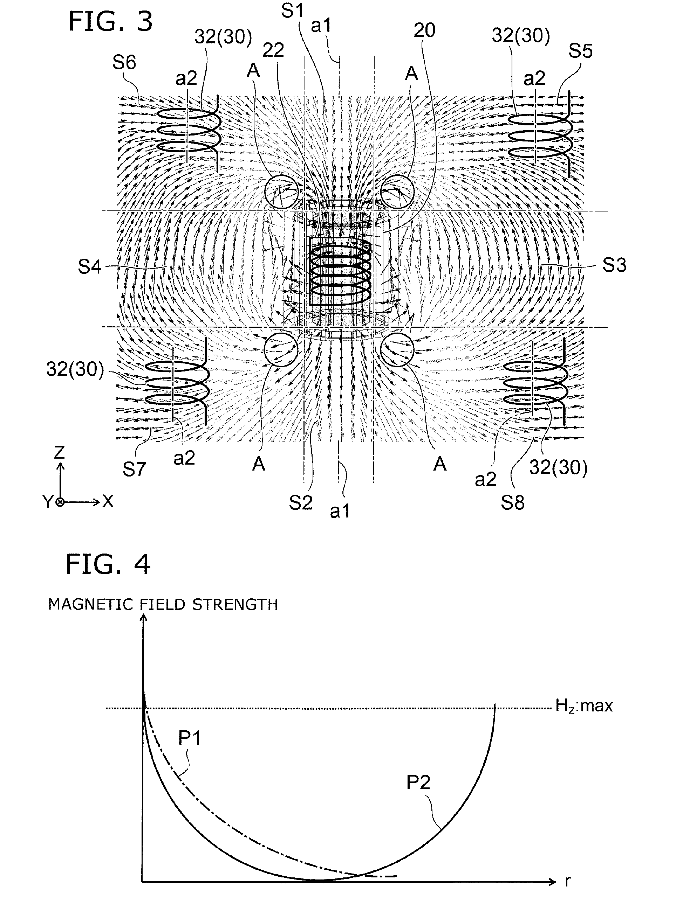

FIG. 3 illustrates a magnetic field distribution of the inductor.

In FIG. 3, the distribution of the magnetic field generated by the first inductor 20 is represented by vectors. The orientation of the arrow corresponds to the orientation of the magnetic field. FIG. 3 shows regions S1-S8. The regions S1 and S2 are regions obtained by extending the outer shape of the first coil 22 in the direction of the coil center axis a1. The regions S3 and S4 are regions obtained by extending the outer shape of the first coil 22 in the direction orthogonal to the coil center axis a1. The region S5 is a region in contact with the regions S1 and S3 on the upper right of the first coil 22. The region S6 is a region in contact with the regions S1 and S4 on the upper left of the first coil 22. The region S7 is a region in contact with the regions S2 and S4 on the lower left of the first coil 22. The region S8 is a region in contact with the regions S2 and S3 on the lower right of the first coil 22.

In the regions S1 and S2 on the upper and lower end side of the first coil 22, the orientation of the magnetic field is dominantly along the coil center axis a1. At a position laterally shifted from the upper and lower end of the first coil 22, the orientation of the magnetic field changes to the direction orthogonal to the coil center axis a1 (see circular frames A in the figure). That is, in the regions S5, S6, S7, and S8, the orientation of the magnetic field is dominantly orthogonal to the coil center axis a1. In the regions S3 and S4 on the lateral side of the first coil 22, the orientation of the magnetic field is dominantly along the coil center axis a1.

FIG. 3 schematically shows the direction of arranging the second coil 32 of the second inductor 30. In the power supply device 110 according to the embodiment, the arrangement relationship between the first inductor 20 and the second inductor 30 is set so that the direction of the magnetic field of the second inductor 30 is substantially orthogonal to the direction of the magnetic field of the first inductor 20.

For instance, in the case where the second inductor 30 is arranged in the region S5-S8, the second inductor 30 is arranged so that the coil center axis a2 of the second inductor 30 is substantially parallel to the coil center axis a1 of the first inductor 20.

The arrangement relationship between the first inductor 20 and the second inductor 30 shown in FIG. 2A and FIG. 2B is an example satisfying the arrangement relationship shown in FIG. 3. The direction of the magnetic field of the first inductor 20 and the direction of the magnetic field of the second inductor 30 are substantially orthogonal to each other. This suppresses coupling between the first inductor 20 and the second inductor 30. Thus, the effect of suppressing switching noise by the second inductor 30 is improved.

FIG. 4 illustrates a magnetic field strength.

In FIG. 4, the horizontal axis represents the distance r from the inductor. The vertical axis represents the magnetic field strength. Here, in the case where the inductor is arranged on a virtual plane, the distance r is the distance along the plane from the center (directly below the center) of the inductor on the plane. FIG. 4 shows strengths P1 and P2.

The strength P1 represents the absolute value of the magnetic field strength with respect to the distance r. As represented by the strength P1, the absolute value of the magnetic field strength is inversely proportional to the distance r from the inductor. That is, the strength P1 is maximized at the distance r equal to zero (directly below the inductor), and decreases in inverse proportion to the increase of the distance r. The strength P2 represents the magnetic field strength of the vertical component of the magnetic field vector with respect to the distance r. As represented by the strength P2, the magnetic field strength of the vertical component of the magnetic field vector is maximized at the distance r equal to zero (directly below the inductor). The strength P2 decreases with the increase of the distance r, and once becomes zero. Then, with the increase of the distance r, the strength P2 shifts to increasing, and increases to the maximum.

The coupling strength with the inductor is determined by the product of the strength P1 and the strength P2 shown in FIG. 4. Thus, it is preferable to arrange another inductor at a position where the coupling strength with the inductor falls below a prescribed level.

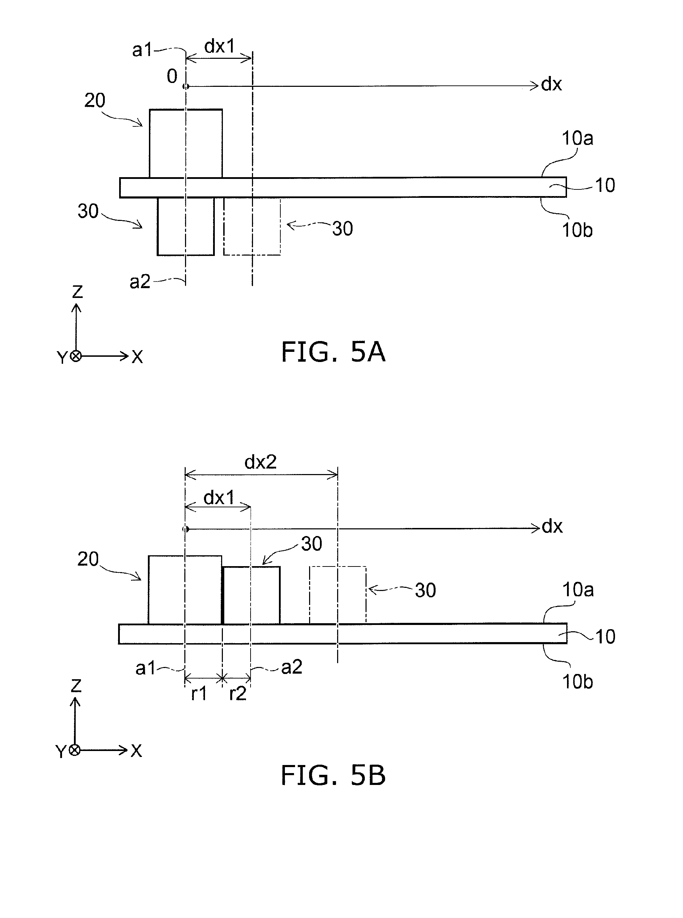

FIG. 5A and FIG. 5B are schematic views illustrating models for investigating the arrangement and distance of two inductors.

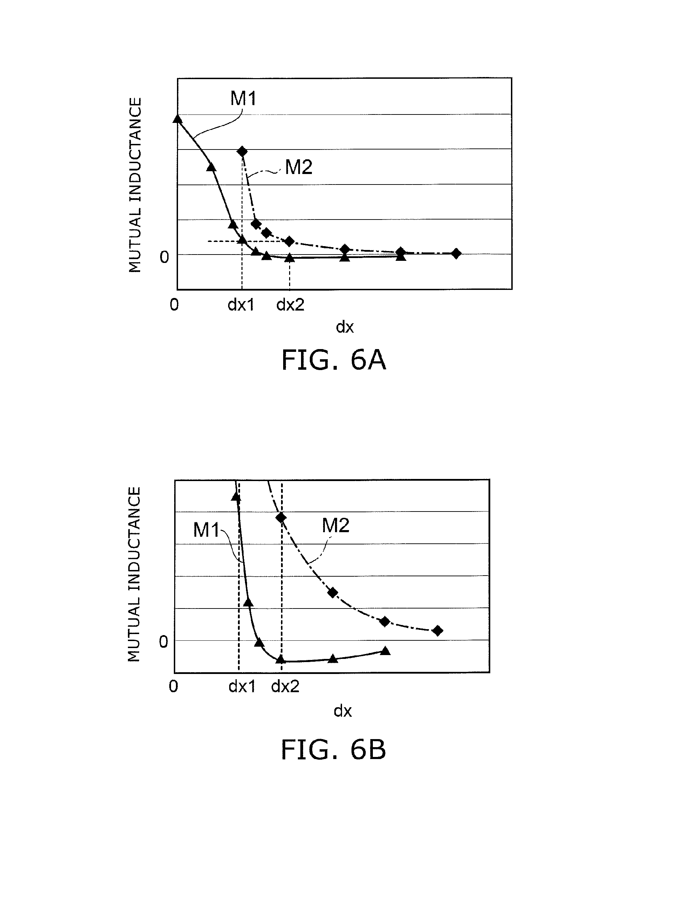

FIG. 6A and FIG. 6B illustrate the relationship between distance and mutual inductance.

FIG. 5A shows a model in which the first inductor 20 is arranged on the first surface 10a of the substrate 10, and the second inductor 30 is arranged on the second surface 10b of the substrate 10. In this model, the state in which the coil center axes a1 and a2 are aligned as viewed in the Z-direction is set to the origin of the distance dx (distance zero).

FIG. 5B shows a model in which the first inductor 20 and the second inductor 30 are arranged on the first surface 10a of the substrate 10. In this model, the state in which the first inductor 20 and the second inductor 30 are adjacently juxtaposed as viewed in the Z-direction is set to the minimum (distance dx1) of the distance dx. The distance dx1 is the sum of the radius r1 of the outer diameter of the first inductor 20 and the radius r2 of the outer diameter of the second inductor 30.

FIG. 6A and FIG. 6B show the result of simulating the relationship of the distance dx in accordance with the model shown in FIG. 5A and FIG. 5B to mutual inductance. The mutual inductance is equivalent to the coupling strength of two inductors. In FIG. 6A, the horizontal axis represents the distance dx. The vertical axis represents the mutual inductance. FIG. 6B is a partially enlarged view along the vertical axis of FIG. 6A.

The relationship M1 shown in FIG. 6A and FIG. 6B represents the relationship between distance dx and mutual inductance corresponding to the model shown in FIG. 5A. The relationship M2 shown in FIG. 6A and FIG. 6B represents the relationship between distance dx and mutual inductance corresponding to the model shown in FIG. 5B.

In the relationship M2, the mutual inductance decreases with the increase of the value of the distance dx from the distance dx1. Also in the relationship M1, the mutual inductance tends to decrease with the increase of the value of the distance dx from the distance dx=0.

Here, the mutual inductances of the relationships M1 and M2 are compared. In the relationship M2, the mutual inductance is high at the distance dx1. In contrast, in the relationship M1, the mutual inductance is low at the distance dx1.

Furthermore, in the relationship M1, a significant decrease is observed in the mutual inductance at the distance dx1 or more. More specifically, in the model shown in FIG. 5A, the coil center axis a1 of the first inductor 20 and the coil center axis a2 of the second inductor 30 are substantially parallel to the Z-direction. In this case, the first inductor 20 and the second inductor 30 are mounted on the mutually opposite surfaces of the substrate 10, and separated by the distance dx1 or more in the X-direction. Then, the mutual inductance can be sufficiently decreased.

On the other hand, the distance dx2 is needed in the model shown in FIG. 5B to obtain the same mutual inductance as obtained at the distance dx1 in the model shown in FIG. 5A (see FIG. 6A and FIG. 6B).

More specifically, in the model shown in FIG. 5B, the first inductor 20 and the second inductor 30 are mounted on the same surface (e.g., first surface 10a) of the substrate 10. In this case, the distance in the X-direction between the first inductor 20 and the second inductor 30 needs to be made longer than that in the model shown in FIG. 5A.

In other words, in the model shown in FIG. 5A, the first inductor 20 and the second inductor 30 are mounted on the mutually opposite surfaces of the substrate 10. Then, a sufficiently low mutual inductance can be obtained even if the first inductor 20 and the second inductor 30 are made close to the distance dx1 in the X-direction. Thus, the length in the X-direction of the substrate 10 is made shorter. This can reduce the area of the substrate 10.

As an example of simulation calculation, the distance dx1 is set to 5.8 millimeters (mm). In this case, the mutual inductance for the relationship M1 shown in FIG. 6A and FIG. 6B is approximately 1/6 of the mutual inductance for the relationship M2. As another example, consider the distance dx such that the mutual inductance is 5 nanohenries (nH). The distance dx in the relationship M1 is approximately 2/5 of the distance dx in the relationship M2.

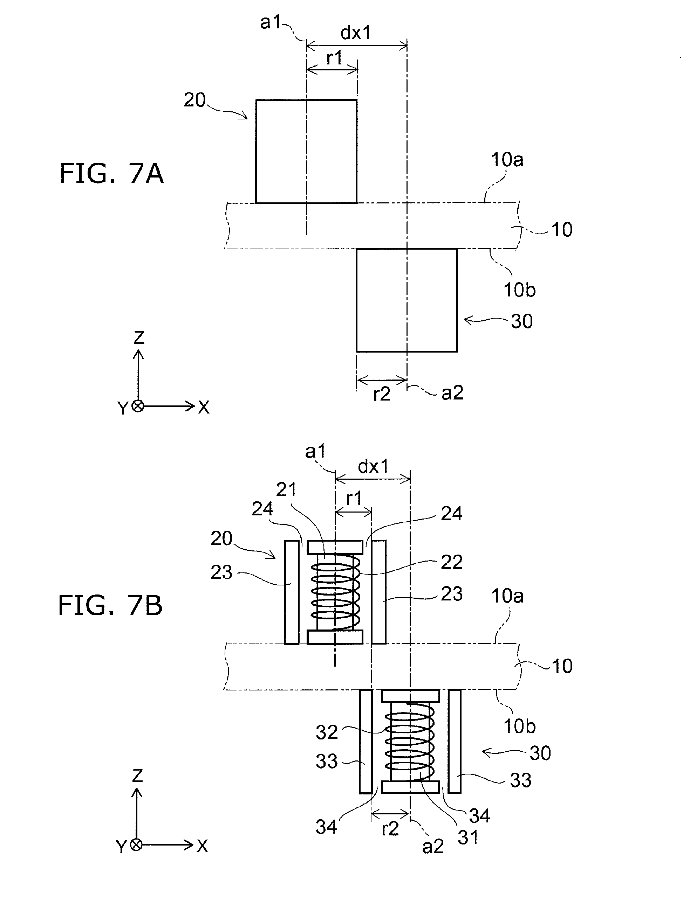

FIG. 7A and FIG. 7B are schematic views illustrating the outer diameter of inductors.

FIG. 7A and FIG. 7B illustrate the outer diameter of conceptual inductors. FIG. 7A and FIG. 7B illustrate the outer diameter of inductors of the open magnetic path type. Here, the inductors of FIG. 7A and FIG. 7B may be inductors of the closed magnetic path type.

As shown in FIG. 7A, the radius r1 of the conceptual first inductor 20 is the radius of the outer diameter (outer diameter of the outermost periphery) of the first coil 22 around the coil center axis a1. The radius r2 of the conceptual second inductor 30 is the radius of the outer diameter (outer diameter of the outermost periphery) of the second coil 32 around the coil center axis a2.

Here, in the case where the first coil 22 of the first inductor 20 is wound around the first core 21, and the outer diameter (outer diameter of the outermost periphery) of the first core 21 is larger than the outer diameter (outer diameter of the outermost periphery) of the first coil 22, the radius r1 is half the outer diameter (outer diameter of the outermost periphery) of the first core 21. Likewise, in the case where the second coil 32 of the second inductor 30 is wound around the second core 31, and the outer diameter (outer diameter of the outermost periphery) of the second core 31 is larger than the outer diameter (outer diameter of the outermost periphery) of the second coil 32, the radius r2 is half the outer diameter (outer diameter of the outermost periphery) of the second core 31.

As shown in FIG. 7B, the first inductor 20 of the open magnetic path type includes a core 21, a first coil 22 wound around the core 21, and a case 23 provided outside the first core 21 and the first coil 22. A gap 24 is provided between the case 23 and the first core 21. In such a first inductor 20 of the open magnetic path type, the radius r1 is the distance from the coil center axis a1 to the outermost side of the gap 24.

Likewise, the second inductor 30 of the open magnetic path type includes a second core 31, a second coil 32 wound around the second core 31, and a case 33 provided outside the second core 31 and the second coil 32. A gap 34 is provided between the case 33 and the second core 31. In such a second inductor 30 of the open magnetic path type, the radius r2 is the distance from the coil center axis a2 to the outermost side of the gap 34.

Thus, in the power supply device 110 according to the embodiment, the area of the substrate 10 can be reduced while sufficiently suppressing the mutual inductance of the first inductor 20 and the second inductor 30.

### (Second embodiment)

Next, a second embodiment is described.

The second embodiment relates to application examples of the power supply device 110.

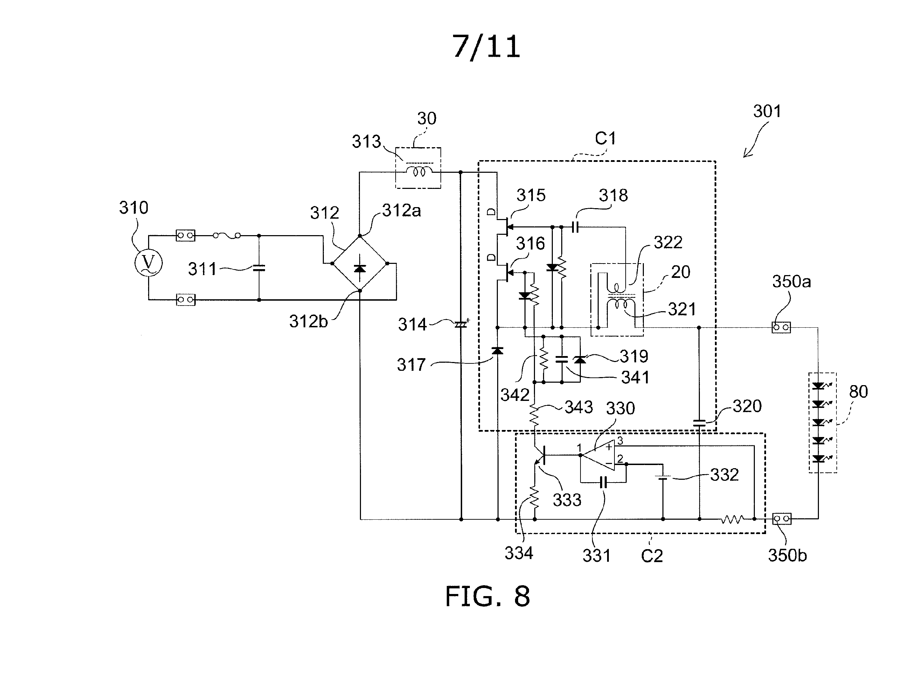

FIG. 8 is a circuit diagram illustrating a first application example.

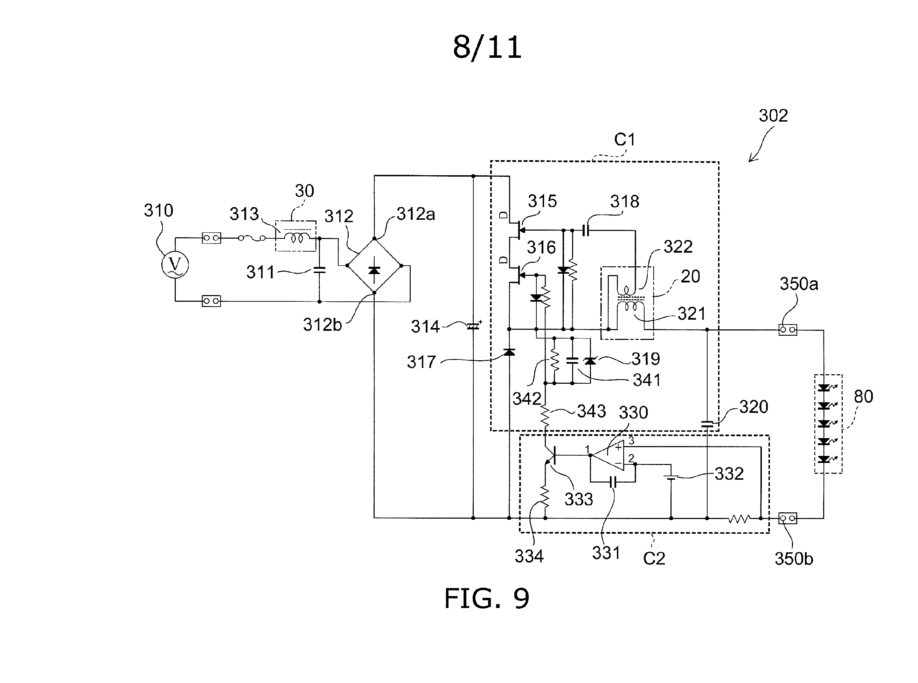

FIG. 9 is a circuit diagram illustrating a second application example.

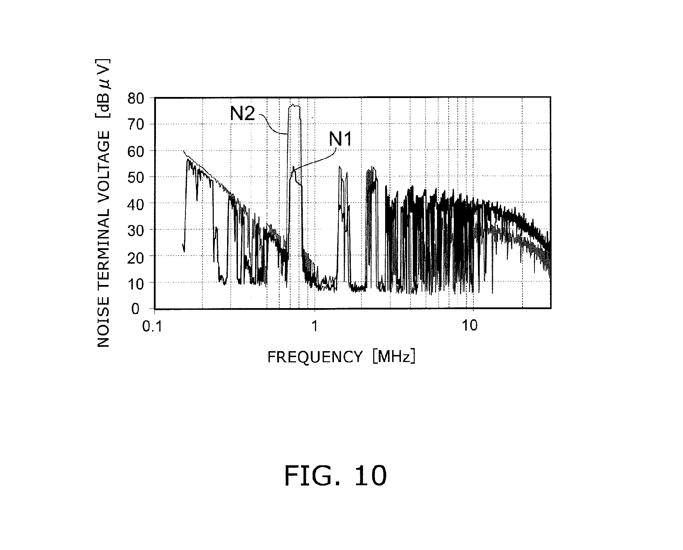

FIG. 10 illustrates the noise level.

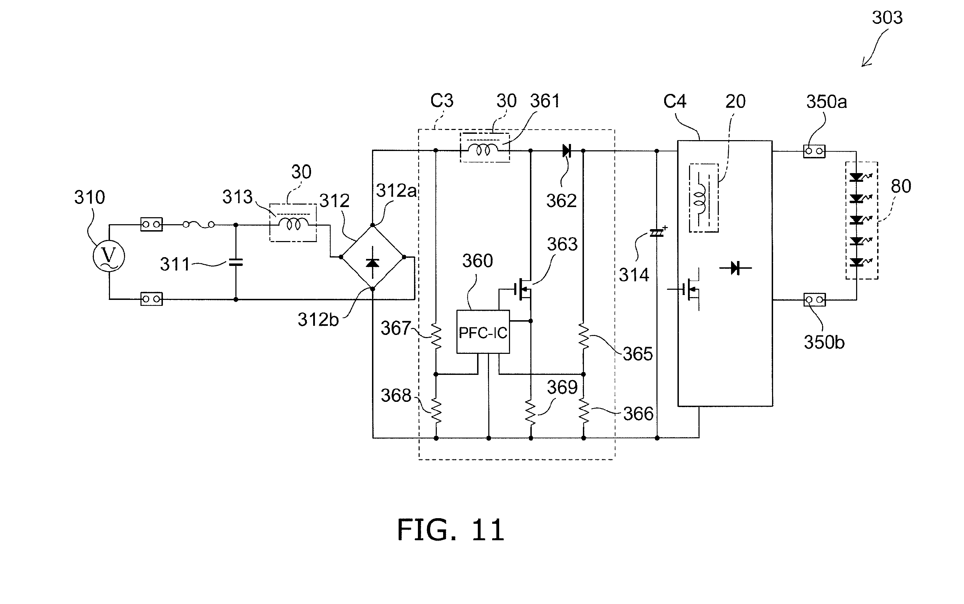

FIG. 11 is a circuit diagram illustrating a third application example.

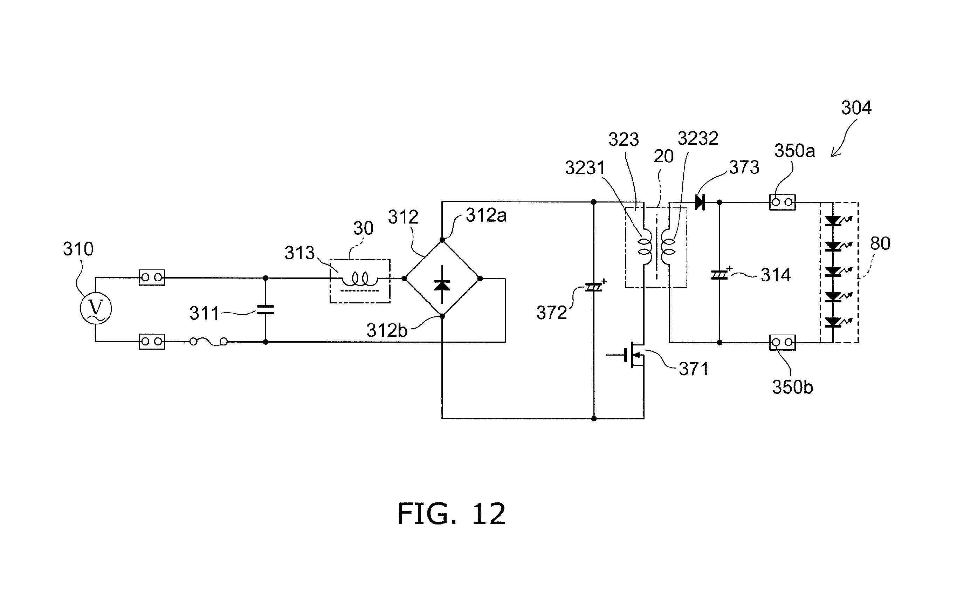

FIG. 12 is a circuit diagram illustrating a fourth application example.

FIG. 8 and FIG. 9 illustrate circuit diagrams of step-down converters of the normally-on type. Here, in the circuit diagram of the step-down converter 301 shown in FIG. 8, a noise filter (normal mode choke) 313 as the second inductor 30 is provided in the stage after a rectification section 312. In the circuit diagram of the step-down converter 302 shown in FIG. 9, a noise filter 313 is provided in the stage before a rectification section 312. The rest of the configuration is similar.

A light emitting device 80 is connected as a load device to the step-down converters 301 and 302 shown in FIG. 8 and FIG. 9. The step-down converters 301 and 302 are connected to an AC power supply 310. The AC power supply 310 is e.g. a commercial power supply. The step-down converters 301 and 302 convert the power of the AC power supply 310 to supply power suitable for the light emitting device 80. Thus, the light emitting device 80 is lit.

The step-down converters 301 and 302 include a rectification section 312, a smoothing capacitor 314, a DC-DC converter C1, and a differential amplifier circuit C2. In the step-down converters 301 and 302, a filter capacitor 311 for reducing noise included in the AC power supply 310 is connected to a pair of input ends of the rectification section 312. The DC-DC converter C1 includes e.g. an output element 315 (switching element), a constant current element 316 (switching element), a rectifying element 317, an inductor 321 as the first inductor 20, a feedback winding (driving element) 322 for driving the output element 315, a coupling capacitor 318, voltage dividing resistors 342, 343, and an output capacitor 320.

The output element 315 and the constant current element 316 are e.g. field effect transistors (FET). The FET is e.g. a high electron mobility transistor (HEMT). The output element 315 and the constant current element 316 are elements of the normally-on type. The HEMT is made of e.g. a wide bandgap semiconductor (e.g., gallium nitride (GaN) or silicon carbide (SiC) having a wider bandgap than silicon). The constant current element 316 is connected to e.g. the smoothing capacitor 314 through the output element 315.

The drain of the output element 315 is connected to the high potential terminal 312a of the rectification section 312 through the noise filter 313. The source of the output element 315 is connected to the drain of the constant current element 316. The gate of the output element 315 is connected to one end of the feedback winding 322 through the coupling capacitor 318.

The source of the constant current element 316 is connected to one end of the inductor 321 and the other end of the feedback winding 322. The gate of the constant current element 316 is inputted with the voltage obtained by voltage-dividing the source potential of the constant current element 316 by the voltage dividing resistors 342, 343. The source of the constant current element 316 is connected to the light emitting device 80 through the inductor 321.

The voltage dividing resistor 342 is connected in parallel with a capacitor 341 and a Zener diode 319. The voltage dividing resistor 342, the capacitor 341, and the Zener diode 319 function as a low-pass filter.

The inductor 321 and the feedback winding 322 are magnetically coupled in the polarity such that the gate of the output element 315 is supplied with a positive voltage when an increasing current flows from one end to the other end of the inductor 321.

The rectifying element 317 is connected between the source of the constant current element 316 and the low potential terminal 312b of the rectification section 312 with the forward direction being the direction from the low potential terminal 312b to the constant current element 316.

The other end of the inductor 321 is connected to the high potential output terminal 350a. The low potential terminal 312b of the rectification section 312 is connected to the low potential output terminal 350b. The output capacitor 320 is connected between the high potential output terminal 350a and the low potential output terminal 350b.

The differential amplifier circuit C2 is connected to the low potential output terminal 350b. That is, the differential amplifier circuit C2 is connected to the end on the low potential side of the light emitting device 80. The differential amplifier circuit C2 detects the current flowing in the light emitting device 80. The differential amplifier circuit C2 feedback-controls the DC-DC converter C1 based on the detected current.

The differential amplifier circuit C2 includes a differential amplification section, a semiconductor element 333, and a resistor 334. In this example, the semiconductor element 333 is an n-p-n transistor. The semiconductor element 333 is an element of the normally-off type. Alternatively, the semiconductor element 333 may be a p-n-p transistor, FET or the like. The semiconductor element 333 may be of the normally-on type. The resistor 334 is connected between the emitter of the semiconductor element 333 and the low potential terminal 312b of the rectification section 312.

The differential amplification section includes e.g. an op-amp 330 and a capacitor 331. The capacitor 331 is connected between the output terminal of the op-amp 330 and the inverting input terminal of the op-amp 330. The differential amplification section has a negative feedback.

The inverting input terminal of the op-amp 330 is inputted with a reference potential 332. The non-inverting input terminal of the op-amp 330 is connected to the low voltage output terminal 530b. The voltage of the light emitting device 80 is substantially constant in accordance with the forward drop voltage. Thus, in the case where the light emitting device 80 is a light emitting element such as LED, the current flowing in the light emitting device 80 is appropriately detected by connection to the end on the low potential side of the light emitting device 80. The output terminal of the op-amp 330 outputs a signal corresponding to the difference between the potential based on the detected current and the reference potential 332.

The output terminal of the op-amp 330 is connected to the base of the semiconductor element 333. Thus, the current between the emitter and the collector of the semiconductor element 333 is controlled by the output from the op-amp 330.

In this type of step-down converters 301 and 302, the inductor 321 as the first inductor 20 and the noise filter 313 as the second inductor 30 are e.g. inductors of the open magnetic path type. The inductor 321 and the noise filter 313 are mounted on the substrate 10 in the arrangement relationship shown in one of FIG. 2A and FIG. 2B.

FIG. 10 shows a noise terminal voltage in the step-down converters 301 and 302 shown in FIG. 8 and FIG. 9. In FIG. 10, the horizontal axis represents the switching frequency (megahertz (MHz)) of the DC-DC converter C1. The vertical axis represents the noise terminal voltage (decibel microvolt (dBµV)). FIG. 10 shows characteristics N1 and N2. The characteristic N1 is obtained in the case where the inductor 321 (see FIG. 8 and FIG. 9) as the first inductor 20 and the noise filter 313 (see FIG. 8 and FIG. 9) as the second inductor 30 are mounted on the mutually opposite surfaces of the substrate 10 and spaced by a distance of 14 mm in the X-direction. The characteristic N2 is obtained in the case where the inductor 321 and the noise filter 313 are mounted on the same surface of the substrate 10 and spaced by a distance of 14 mm in the X-direction.

As shown in FIG. 10, it is found that the noise terminal voltage is lower in the characteristic N1 than in the characteristic N2.

For instance, switching operation at a switching frequency of 500 kHz or more results in a high loss (iron loss) of the core of the inductor 321. Thus, it is necessary to reduce the effective magnetic permeability of the core or to use a magnetic material having a low magnetic permeability for the core. This can decrease the size of the inductor 321 in radio frequency operation at e.g. 500 kHz or more. On the other hand, from the viewpoint of suppressing noise due to the leaked magnetic flux, it is generally difficult to arrange the inductor 321 and the noise filter 313 close to each other.

The power supply device 110 according to the embodiment can be applied to the step-down converters 301 and 302. This can achieve downsizing while suppressing switching noise in e.g. the converter operated at a switching frequency of 500 kHz or more.

FIG. 11 illustrates a circuit diagram of a step-down converter 303 including two converters.

The step-down converter 303 shown in FIG. 11 includes a rectification section 312, a smoothing capacitor 314, a power factor improving converter C3, and a load power controlling converter C4. A noise filter 313 is provided in the stage before the rectification section 312. The load power controlling converter C4 includes a first inductor 20. The load power controlling converter C4 is based on e.g. the DC-DC converter C1 of the step-down converters 301 and 302 shown in FIGS. 8 and 9. Alternatively, the load power controlling converter C4 may be based on a converter having a configuration other than the DC-DC converter C1.

The power factor improving converter C3 includes e.g. a control section 360, a switching element 363, a diode 362, a chopper choke 361, and resistors 365, 366, 367, 368, 369. The chopper choke 361 is the second inductor 30. The power factor improving converter C3 is provided between the rectification section 312 and the load power controlling converter C4.

The chopper choke 361 is connected between the high potential terminal 312a of the rectification section 312 and the diode 362. The switching element 363 is connected in parallel between the chopper choke 361 and the diode 362. Series-connected resistors 365 and 366 are connected between the diode 362 and the load power controlling converter C4.

Series-connected resistors 367 and 368 are connected between the high potential terminal 312a of the rectification section 312 and the chopper choke 361. The control section 360 is inputted with a choke voltage from the load power controlling converter C4. The control section 360 is inputted with a voltage-divided potential divided by the resistors 365 and 366, a voltage-divided potential divided by the resistors 367 and 368, and a switching current of the switching element 363. The output of the control section 360 is connected to the gate of the switching element 363.

In this type of step-down converter 303, the first inductor 20, and the noise filter 313 and the chopper choke 361 as the second inductor 30, are e.g. inductors of the open magnetic path type. The first inductor 20, and the noise filter 313 and the chopper choke 361, are mounted on the substrate 10 in the arrangement relationship shown in one of FIG. 2A and FIG. 2B.

FIG. 12 illustrates a circuit diagram of an insulated flyback converter 304.

The flyback converter 304 shown in FIG. 12 includes a noise filter 313, a rectification section 312, a smoothing capacitor 372, a power conversion transformer 323, a diode 373, a switching element 371, and a smoothing capacitor 314. The power conversion transformer 323 is the first inductor 20. The noise filter 313 is the second inductor 30.

The smoothing capacitor 372 is connected between the high potential terminal 312a and the low potential terminal 312b of the rectification section 312. The power conversion transformer 323 includes a primary winding 3231 and a secondary winding 3232. The switching element 371 is connected to the primary winding 3231.

The anode of the diode 373 is connected to one end of the secondary winding 3232. The smoothing capacitor 314 is connected between the cathode of the diode 373 and the other end of the secondary winding 3232.

In this type of flyback converter 304, the power conversion transformer 323 as the first inductor 20 and the noise filter 313 as the second inductor 30 are e.g. inductors of the open magnetic path type. The power conversion transformer 323 and the noise filter 313 are mounted on the substrate 10 in the arrangement relationship shown in one of FIG. 2A and FIG. 2B.

The power supply device 110 according to the embodiment can be applied to the step-down converters 301-303 and the flyback converter 304 as described above. This can reduce switching noise by suppressing the mutual inductance of the inductors. Furthermore, the arrangement spacing between the inductors can be narrowed while achieving a sufficient noise suppression effect. This can downsize the power supply device 110.

As described above, the embodiments can provide a power supply device and an illumination device in which coupling between the inductor for power conversion and the inductor for suppressing noise is suppressed.

Although the embodiments are described above, the invention is not limited to these examples. For example, additions, deletions, or design modifications of components or appropriate combinations of the features of the embodiments appropriately made by one skilled in the art in regard to the embodiments described above are within the scope of the invention to the extent that the purport of the invention is included.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A power supply device (110, 301, 302, 303, 304) comprising:
a substrate (10) having a first surface (10a) and a second surface (10b) on opposite side from the first surface (10a);
a first inductor (20) including a first coil (22) having a coil center axis substantially parallel to a first direction, used for a switching circuit for controlling power supplied to a load (80), and mounted on the first surface (10a) of the substrate (10); and
a second inductor (30) including a second coil (32) having a coil center axis substantially parallel to the first direction, electrically connected to the first inductor (20), and mounted on the second surface (10b) of the substrate (10),
as viewed in a direction orthogonal to the first surface (10a), position of the first coil (22) of the first inductor (20) not overlapping position of the second coil (32) of the second inductor (30).

2. The device (110, 301, 302, 303, 304) according to claim 1, wherein maximum switching frequency of the switching circuit is 500 kilohertz or more.

3. The device (110, 301, 302, 303, 304) according to claim 2, wherein the switching circuit includes a switching element made of a semiconductor having a wider bandgap than silicon.

4. An illumination device (200) comprising:
a power supply device (110, 301, 302, 303, 304) according to one of claims 1 to 3; and
an illumination load (80) connected to the power supply device (110, 301, 302, 303, 304).
